Europäisches Patentamt

European Patent Office

Office européen des brevets

(19)

(11) Veröffentlichungsnummer: **0 025 770**
**B1**

(12)  **EUROPÄISCHE PATENTSCHRIFT**

(45) Veröffentlichungstag der Patentschrift:
**18.04.84**

(21) Anmeldenummer: **80730042.1**

(22) Anmeldetag: **20.06.80**

(51) Int. Cl.³: **H 02 M 1/08**

(54) **Schaltungsanordnung zur Unterdrückung von Zündimpulsen parallelgeschalteter Thyristoren.**

(30) Priorität: **08.09.79 DE 2936742**

(43) Veröffentlichungstag der Anmeldung:
**25.03.81 Patentblatt 81/12**

(45) Bekanntmachung des Hinweises auf die Patenterteilung:
**18.04.84 Patentblatt 84/16**

(84) Benannte Vertragsstaaten:
**AT CH LI SE**

(56) Entgegenhaltungen:
**DE - A - 2 333 638**
**DE - A - 2 536 413**
**FR - A - 2 343 277**

(73) Patentinhaber: **Licentia Patent-Verwaltungs-GmbH,**
**Theodor-Stern-Kai 1, D-6000 Frankfurt/Main 70 (DE)**

(72) Erfinder: **Nowak, Siegfried, Prinzenstrasse 27,**
**D-1000 Berlin 42 (DE)**
Erfinder: **Koenig, Paul, Ansbacher Strasse 72,**
**D-1000 Berlin 30 (DE)**

(74) Vertreter: **Lertes, Kurt, Dr., Licentia**
**Patent-Verwaltungs-GmbH Theodor-Stern-Kai 1,**
**D-6000 Frankfurt/M 70 (DE)**

Schaltungsanordnung zur Unterdrückung von Zündimpulsen parallelgeschalteter Thyristoren

Die Erfindung bezieht sich auf eine Schaltungsanordnung zur Unterdrückung von Zündimpulsen gemäss dem Oberbegriff des Patentanspruchs. Ein Steuersatz mit der Möglichkeit der Unterdrückung von Zündimpulsen ist in allgemeiner Form aus dem Buch von K. Heumann «Grundlagen der Leistungselektronik», B. G. Teubner, Stuttgart, 1975, Seite 48 bekannt.

Werden in einer Stromrichter-Brückenschaltung während der Kommutierung des Stromes von einem aus mehreren parallelgeschalteten Thyristoren gebildeten Zweig auf einen anderen Zweig Zündimpulse auf die parallelgeschalteten Thyristoren gegeben, so kann es vorkommen, dass einer der Thyristoren während kurzzeitiger Spannung in Blockierungsrichtung leitend bleibt. Geht nun die Spannung wieder durch Null, so bleibt der betroffene Thyristor durchgezündet und übernimmt bei darauffolgender Wiederkehr der positiven Spannung den vollen Laststrom, bis die anderen Thyristoren ebenfalls leitend geworden sind. Dies verzögert sich, da die Spannung (Blockierspannung) inzwischen auf die Durchlassspannung des einen Thyristors abgesunken ist. Es kann zur thermischen Zerstörung dieses Thyristors kommen. Es ist daher notwendig, die Ansteuerung der parallelgeschalteten Thyristoren während der Kommutierung des Stromes zu vermeiden.

Der Erfindung liegt deshalb die Aufgabe zugrunde, eine Schaltungsanordnung zur Unterdrückung von Zündimpulsen anzugeben, die während der Kommutierung des Stromes von den parallelgeschalteten Thyristoren eines Zweiges auf einen anderen Zweig der Stromrichter-Brücke die Gefahr beseitigt, dass einer der parallelgeschalteten Thyristoren den gesamten Laststrom übernimmt und thermisch zerstört wird.

Diese Aufgabe wird durch die im Anspruch gekennzeichneten Merkmale gelöst.

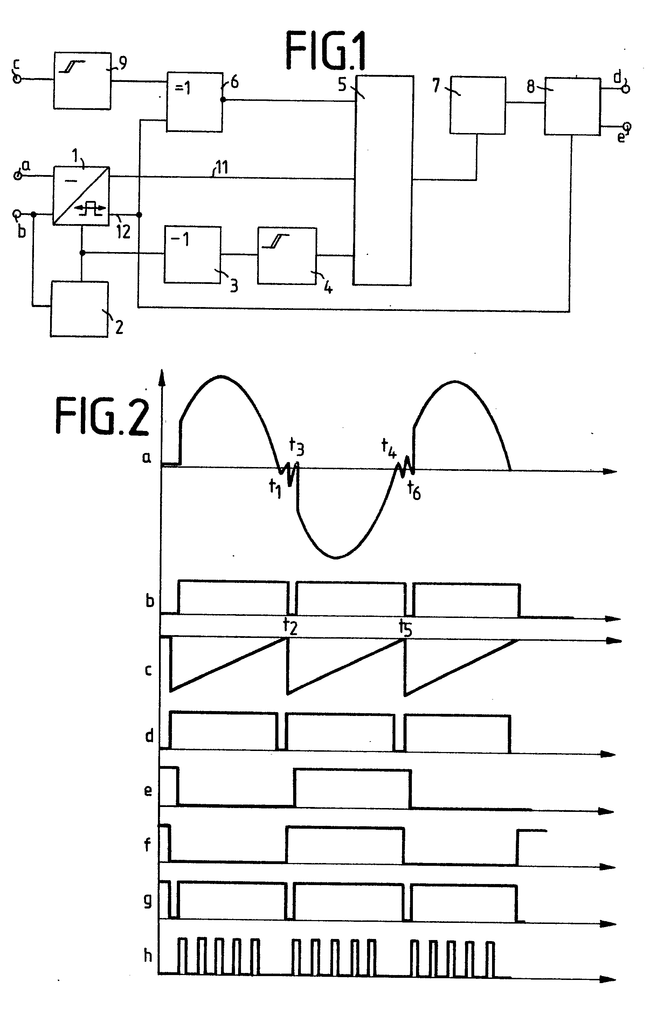

Anhand eines in der Fig. 1 der Zeichnung dargestellten Ausführungsbeispiels soll der der Erfindung zugrundeliegende Gedanke erläutert werden.

Es zeigen:

Fig. 1 das Blockschaltbild der Schaltungsanordnung zur Unterdrückung von Zündimpulsen und

Fig. 2 den zeitlichen Verlauf der Ein- bzw. Ausgangsgrössen von einzelnen Bausteinen des Blockschaltbildes nach Fig. 1.

In der Fig. 1 ist mit 1 ein Baustein zur Bildung von Impulsblöcken für parallelgeschaltete Thyristoren im Zweig einer Stromrichter-Brücke bezeichnet, an dessen Eingangsklemme a ein Signal $U_{est}$ liegt. Dieses stellt das Ausgangssignal eines Stromreglers dar, der zu einem nicht dargestellten Drehzahlregelkreis gehört. An eine Klemme b des Bausteins zur Bildung von Impulsblöcken 1 wird eine Synchronisierspannung gelegt, die vor einem nicht dargestellten, die Brücke speisenden Stromrichtertransformator abgegriffen wird und die auch einen Sägezahnspannungsgenerator 2 beeinflusst.

Der Ausgang des Sägezahngenerators 2 ist über einen Inverter 3 mit einem Komparator 4 und einem Steuereingang des Bausteines zur Bildung von Impulsblöcken 1 verbunden.

Letzterer besitzt zwei Ausgänge, von denen der eine über eine Leitung 11 an einen Eingang einer als UND-Glied ausgebildeten logischen Verknüpfungsschaltung 5 und der andere über eine Leitung 12 an einen Eingang eines Exklusiv-ODER-Gatters 6 angeschlossen ist. Die Ausgänge des Komparators 4 und des Exklusiv-ODER-Gatters 6 führen zu je einem weiteren Eingang der logischen Verknüpfungsschaltung 5, deren Ausgang mit dem Steuereingang eines Impulsgenerators 7 verbunden ist. An den Impulsgenerator 7 ist eine Schaltung zur Kanaltrennung 8 angeschlossen, an deren Ausgängen d und e je eine von zwei um 180° phasenversetzte Impulsketten für die Zündung der Thyristoren je einer Zweighälfte der Brücke anliegen. Ein weiterer Ausgang der Schaltung zur Kanaltrennung 8 ist mit der Leitung 12 verbunden. An einer Eingangsklemme c liegt die Stromrichtertransformatorsekundärspannung, die einen Komparator mit Hysterese 9 beeinflusst. An den Ausgang des Komparators 9 ist ein weiterer Eingang des Exklusiv-ODER-Gatters 6 angeschlossen.

Die Funktionsweise der Anordnung nach Fig. 1 wird nun anhand der in der Fig. 2 dargestellten Signalverläufe näher erläutert.

Die Kurve a in der Fig. 2 zeigt den zeitlichen Verlauf der Stromrichtertransformatorsekundärspannung, die der Klemme c des Komparators 9 zugeführt wird. Während der Zeit $t_1$ bis $t_3$ bzw. $t_4$ bis $t_6$ erfolgt die Kommutierung, d.h. der Übergang des Stromes von den parallelgeschalteten Thyristoren eines Zweiges auf einen anderen Zweig der Stromrichter-Brücke.

Der zeitliche Verlauf der Ausgangsspannung des Komparators 9 ist in Fig. 2e dargestellt. Der Komparator 9 arbeitet mit Hysterese, die notwendig ist, um ein mehrmaliges Hin- und Herschalten des Komparators 9 im Bereich des Spannungsnulldurchgangs der Stromrichtertransformatorsekundärspannung zu vermeiden. Die Vergleichsspannung des Komparators ist null Volt; seine Hysterese ist so eingestellt, dass die Kippunkte bei ± 50 V der Stromrichtertransformatorsekundärspannung liegen. Bei positiver Eingangsspannung des Komparators entsteht an dessen Ausgang ein 0-Signal, bei negativer Eingangsspannung entsteht an dessen Ausgang ein positives L-Signal.

An der Klemme b in Fig. 1 liegt eine Synchronisierspannung an, deren Nulldurchgänge den Sägezahnspannungsgenerator 2 beeinflussen.

Dieser erzeugt eine Sägezahnspannung von der halben Periode der Synchronisierspannung. Die Sägezahnspannung wird dem Baustein zur Bildung von Impulsblöcken 1 zugeführt und dort mit der an der Klemme a liegenden Spannung $U_{est}$ verglichen. Bei Gleichheit beginnt ein Impulsblock, Fig. 2b, der nicht mit dem folgenden Nulldurchgang der Synchronisierspannung endet, sondern mit dem Beginn bzw. Ende eines jeden Sägezahnes. Die Sägezahnspannung ist gegenüber der Synchronisierspannung etwas phasenverschoben. Als Folge davon können Zündimpulse für die eine Spannungshalbwelle in die nächste überhängen. Dieses ist in bezug auf die Zündung der parallelgeschalteten Thyristoren nicht erwünscht. Deshalb wird die Sägezahnspannung im Baustein 3 invertiert (Fig. 2c) und auf einen Komparator 4 gegeben, dessen Schaltpunkt so gewählt ist, dass sich Impulse nach Fig. 2d ergeben, die der logischen Verknüpfungsschaltung 5 zugeführt werden. Die Impulsblöcke nach Fig. 2b werden über die Leitung 11 ebenfalls der logischen Verknüpfungsschaltung 5 zugeführt. Der andere Ausgang des Bausteines zur Bildung von Impulsblöcken 1 an dem die Leitung 12 angeschlossen ist, führt Impulse wie sie in Fig. 2f dargestellt sind und die das Exklusiv-ODER-Gatter 6 und die Schaltung zur Kanaltrennung 8 beeinflussen. Die Impulse am negierenden Ausgang des Exklusiv-ODER-Gatters 6 sind in Fig. 2g dargestellt und beaufschlagen ebenfalls die logische Verknüpfungsschaltung 5.

Deren Ausgangssignal gibt, wenn die logische Verknüpfung erfüllt ist, den Impulsgenerator frei. Damit gelangen Kettenimpulse nach Fig. 2h auf die Schaltung zur Kanaltrennung 8. Jedesmal wenn die logische UND-Verknüpfung am Baustein 5 nicht erfüllt ist, wird der Impulsgenerator 7 gesperrt. Dieses geschieht während der Zeiten $t_1$ bis $t_2$ bzw. $t_4$ bis $t_5$ durch ein entsprechendes Signal am Ausgang des Komparators 4 (Fig. 2d) und während der Zeiten $t_2$ bis $t_3$ bzw. $t_5$ bis $t_6$ durch das Ausgangssignal des Exklusiv-ODER-Gatters 6.

## Patentanspruch

Schaltungsanordnung zur Unterdrückung von Zündimpulsen für in Brückenzweigen parallelgeschaltete Thyristoren einer über einen Stromrichtertransformator gespeisten Stromrichter-Brückenschaltung während eines Kommutierungsvorganges unter Einsatz eines Steuersatzes für die Thyristoren, bei dem einem Baustein (1) zur Bildung von Impulsblöcken eine von einem Stromregler vorgegebene Steuerspannung und zum Vergleich mit dieser Spannung eine von einem Sägezahngenerator (2) unter Verwendung einer auch an den Baustein gelegten Synchronisierspannung erzeugte Sägezahnspannung zugeführt werden und bei dem der Baustein (1) einen Impulsgenerator (7) zur Erzeugung von Zündkettenimpulsen steuert, dadurch gekennzeichnet, dass
— eine als UND-Glied ausgebildete logische Verknüpfung (5) dem Impulsgenerator (7) vorgeschaltet ist,
— ein erster Eingang der logischen Verknüpfung (5) mit einem negierenden Ausgang eines Exklusiv-ODER-Gatters (6) verbunden ist, dessen einer Eingang an einen Ausgang (12) des Bausteins (1) zur Bildung von Impulsblöcken und dessen anderer Eingang an einen mit der Stromrichtertransformatorsekundärspannung beaufschlagten, mit einer Schalthysterese ausgebildeten ersten Komparator (9) angeschlossen ist,
— ein zweiter Eingang der logischen Verknüpfung (5) direkt mit einem Ausgang (11) des Bausteines (1) zur Bildung von Impulsblöcken verbunden ist und
— ein dritter Eingang der logischen Verknüpfung (5) mit dem Ausgang eines zweiten Komparators (4) verbunden ist, der über einen Inverter (3) an den Sägezahngenerator (2) angeschlossen ist.

## Claim

Switching arrangement for suppressing ignition pulses for thyristors which are connected in parallel in bridge arms and which are fed via a rectifier bridge circuit connected to a rectifier transformer during a commutating operation that utilises a control unit for the thyristors, in which one component (1) is fed with a voltage supplied by a saw-tooth generator together with a synchronisation voltage to the unit so as to provide a comparison voltage in conjunction with a predetermined control voltage supplied by the current regulator for forming pulse blocks, whereby the component (1) controls a pulse generator (7) for the generation of ignition chain pulses, characterised in that
— a logic connection in the form of an AND member (5) is connected in series with the pulse generator (7),
— a first input of the logic connection (5) is connected with the negating output of an or else circuit (6), the one input of which is connected to the one output (12) of the component (1) for forming pulse blocks and the other input of which is connected with a first comparator (9) that is equipped with a switching hysterisis and is actuated by means of the secondary voltage of the rectifier transformer,
— a second input of the logic connection (5) is directly connected to an output (11) of the component (1) for forming pulse blocks and
— a third input of the logic connection (5) is connected with the output of a second comparator (4) which is coupled to the saw-tooth generator (2) by means of an inverter (3).

## Revendication

Montage de circuits pour le tronquage d'impulsions d'amorçage pour des thyristors montés en parallèle dans des branches de pont d'un circuit en pont de convertisseur alimenté par un transformateur-convertisseur pendant un processus de commutation en utilisant un équipement de commande pour les thyristors sur un composant (1) duquel est appliquée une tension de commande prédéfinie par un régulateur de courant pour la formation de lots d'impulsions et, pour comparer à cette tension, une tension en dents de scie produite par un générateur d'impulsions en dents de scie (2) en utilisant une tension de synchronisation appliquée également sur le composant et sur lequel montage le composant (1) commande un générateur d'impulsions (7) pour la production d'impulsions d'amorçage itératives, caractérisé par le fait que
— un élément logique (5) en forme de conditionneur est monté en amont du générateur d'impulsions (7),
— une première entrée de l'élément logique (5) est reliée avec une sortie inversée d'une porte OU exclusive (6), dont l'une des entrées est branchée sur une sortie (12) du composant (1) pour la formation de lots d'impulsions et dont l'autre entrée est branchée sur un premier comparateur (9) alimenté par la tension secondaire du transformateur-convertisseur et équipé d'une hystérésis de commande,

— une deuxième entrée de l'élément logique (5) est reliée directement avec une sortie (11) du composant (1) pour la formation de lots d'impulsions et

— une troisième entrée de l'élément logique (5) est reliée avec la sortie d'un deuxième comparateur (4) qui est branché sur le générateur d'impulsions en dents de scie (2) par l'intermédiaire d'un circuit inverseur (3).

# FIG.1

# FIG.2